# EUROPEAN PATENT SPECIFICATION

(11) **EP 1 388 278 B1**
(45) Date of publication and mention of the grant of the patent: **01.10.2008**
(21) Application number: 03447207.6
(22) Date of filing: 06.08.2003
(51) Int. Cl.: A01B 39/26, F15C 3/02

(54) **Device with tool for carrying out ground works**
Bodenbearbeitungsgerät
Outil pour le travail du sol

(30) Priority: 06.08.2002 BE 200200471
(43) Date of publication of application: 11.02.2004
(73) Proprietor: Didden, Luc, 2430 Laakdal (BE)
(72) Inventor: Didden, Luc, 2430 Laakdal (BE)
(74) Representative: Callewaert, Jean

(56) References cited:
- DE-A- 3 638 076
- DE-A- 10 005 290
- FR-A- 1 468 829
- FR-A- 2 290 828
- FR-A- 2 390 095
- US-B1- 6 397 890
- PETER ROHNER: "Industrial Hydraulic Control" 1995 , JOHN WILEY & SONS , BRISBANE (AU) XP002243056 * page 17, right-hand column, line 12 - line 18; figure 31 *

## Description

The invention concerns a device provided with a tool, such as for example a rotary cultivator, a lawn mower or a plough to work the ground between protruding obstacles, such as for example trees, pegs, bordered beds while moving said device over the ground. The tool is hereby mounted on a work arm which can be moved in relation to the device, which is driven by a hydraulic system via a hydraulic proportional steering slide, whereby the latter co-operates with a detection unit in such a manner that, when the tool is situated at a certain detection distance from one side of an obstacle, this detection unit controls said steering slide in order to maintain said distance until said tool is situated practically on the other side of the obstacle, whereby said steering slide comprises a steering rod and is connected to a hydraulic pressure line of a hydraulic unit and to a reservoir with a hydraulic liquid, and further has two outlets A and B which are connected to the hydraulic system, whereby the steering rod has at least two constrictions, such that when it is moved in relation to the steering slide, in a first position, a first outlet A is connected to said pressure line via a first constriction, and a second outlet B is connected to said reservoir via a second constriction, such that the aforesaid hydraulic system is driven in a specific direction in order to move the work arm with the tool, and, in a second position, the first outlet A is connected to the reservoir via the first constriction, and the second outlet B is connected to the pressure line via the second constriction, such that the hydraulic system is driven in the opposite sense, as a result of which the work arm undergoes a corresponding movement (e.g. see FR-A-2 290 828).

According to the present state of the art, existing devices provided with automated moveable tools with hydraulic control react too slowly on the one hand, as a result of which the device has to be slowed down or has to be stopped at the above-mentioned obstacles, and they are too inaccurate on the other hand, as a result of which obstacles can be damaged. Consequently, the tool often has to be provided manually between or around the obstacles. This is sometimes very difficult and hence also time-consuming.

The invention aims to remedy these disadvantages by means of a device whose work arm and the attached tool veer away automatically, quickly and accurately before hitting an obstacle, and automatically assumes its position again when the obstacle has been passed without hitting the obstacle and without the device having to be slowed down at said obstacles.

To this aim, said steering rod of the hydraulic proportional steering slide according to the invention as claimed has a first and a second recess, connected to said first and second constriction respectively, such that in a neutral or third position of said steering rod, the aforesaid first outlet is connected to the aforesaid pressure line as well as to said reservoir via said first recess, while said second outlet is connected to this pressure line and the reservoir via said second recess.

Preferably, according to the invention, said recesses extend on either side of the respective constriction, whereby the cross section of each of said recesses is inversely proportionate to its distance to the accompanying constriction.

Practically, said movable arm is hinge-mounted to said device in relation to a vertical axis of rotation, and said detection unit comprises a detection arm which is also hinge-mounted in relation to said axis of rotation, whereby means are provided to measure the relative movement of said detection arm in relation to said movable work arm which work in conjunction with said steering slide in order to drive this movable arm to minimize said relative movement or to annul it, such that the movable arm follows the movement of the detection arm.

In an advantageous manner, said means for measuring the relative movement of said detection arm in relation to said movable arm comprise a potentiometer.

In a particularly advantageous manner, the movable arm is connected to the detection arm, such that the latter is brought to a front position according to the direction of movement of the device, and protrudes in relation to said tool at a predetermined detection distance.

According to a special embodiment, said detection arm comprises a ring whose radius is larger than the radius of said tool, and whereby the detection distance amounts to the distance between these radiuses.

According to this special embodiment, the ring is preferably erected such that it rotates freely around its axis.

The invention also concerns a device whereby height adjusting means are provided to maintain the tool at a constant height in relation to the ground.

Other particularities and advantages of the invention will become clear from the following description of specific embodiments of the device according to the invention. This description is given as an example only and does not restrict the scope of the claimed protection in any way; the figures of reference used hereafter refer to the accompanying drawings.

Figure 1 schematically represents a top view of a device according to this special embodiment.

Figure 2 schematically represents the progression of the device with movable work arm according to this special embodiment, with obstacles protruding from the ground.

Figure 3 is a block diagram with a schematic representation of the adjustment of the position of the movable work arm according to this special embodiment of the invention.

Figure 4 schematically represents a top view of a hydraulic proportional steering slide with a partial cross section according to this special embodiment of the invention, having a steering rod in the neutral position, i.e. said third position.

Figure 5 is a schematic representation as in figure 4 with the steering rod in said first position.

Figure 6 is a schematic representation as in figure 4 with the steering rod in said second position.

Figure 7 is a schematic representation of a movable work arm with tool according to this special embodiment of the invention.

Figure 8 is a schematic representation of a detection arm according to this special embodiment of the invention.

Figure 9 is a schematic representation of the combination of a work arm from figure 7 and a detection arm from figure 8.

Figure 10 schematically represents a top view of a device according to another embodiment of the invention with a series of tools rotating around their axis.

Figure 11 is a schematic representation as in figure 4 with a variant of the steering rod according to the invention in said neutral or third position.

In the different drawings, the same reference figures refer to identical or analogous elements.

The invention concerns a device with a work arm which determines the position of a tool mounted on said work arm, and which makes use of a hydraulic proportional steering slide which allows to make the work arm react very quickly by means of a hydraulic system and to make it change its position very accurately. The tool may consist of for example a rotary cultivator or a plough for working the ground, or of a mower for mowing the grass or other plants. The fast and accurate movement of the work arm allows to make the tool move efficiently between or around protruding obstacles, localised by means of detection means, without the device having to be slowed down to this end. The obstacles may for example consist of trees in an orchard, whereby the ground between these trees has to be worked, or of lighting posts on the verge of a motorway, whereby the grass or other plants on this verge have to be mowed.

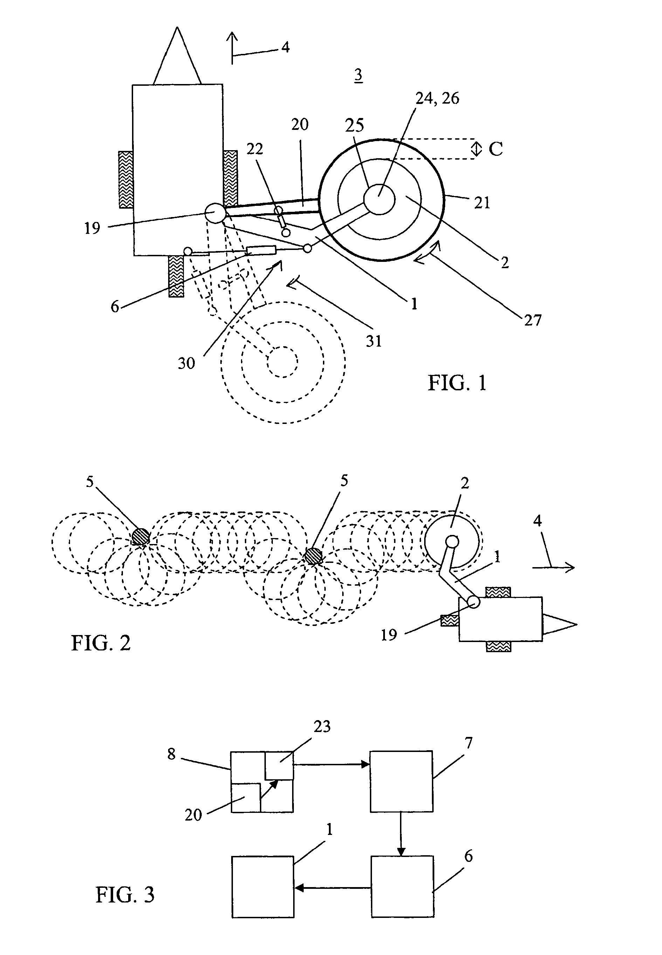

Figure 1 schematically represents a special embodiment of such a device with a movable work arm 1. At the free end of this work arm 1 has been mounted a tool 2 to work the ground 3 while the device is being moved over the ground 3, upon which obstacles 5 are provided as is schematically represented in figure 2.

As an example, the tool 2 may be a rotary cultivator rotating around its axis. While the device is being moved forward over the ground 3 according to arrow 4, the tool 2 is brought between obstacles 5 by means of the work arm 1, which may for example be trees in an orchard.

The movable work arm 1 is driven by a hydraulic system 6 which is connected to a hydraulic proportional steering slide 7 working in conjunction with a detection unit 8, as is schematically represented in figure 3.

When the tool 2 is situated at a certain detection distance C from one side of an obstacle 5, the detection unit 8 will control the steering slide 7 in such a way as to maintain this distance C until the tool 2 is practically situated on the other side of the obstacle 5.

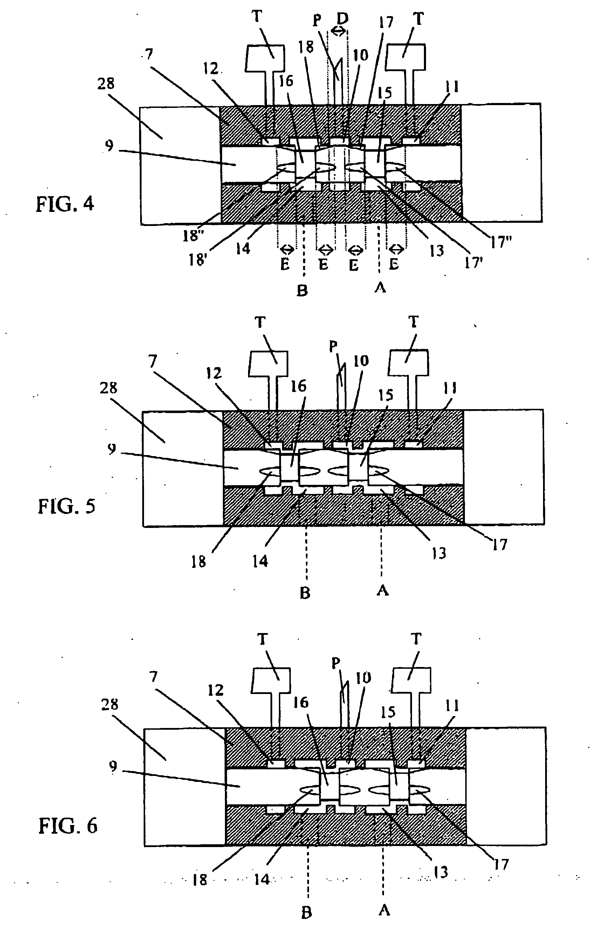

The steering slide 7, represented in figure 4, comprises a steering rod 9 which can be moved in the longitudinal direction in this steering slide 7, and it is connected to a hydraulic pressure line P of a hydraulic unit, not represented in the figure, and to a reservoir T with a hydraulic liquid.

This steering slide 7 is formed for example of a metal block in which extends a cylindrical bore hole, whereby said steering rod 9 is provided in this bore hole in a practically fitting manner and can be moved in the bore hole in the longitudinal direction thereof.

Further, the steering slide 7 has five ring-shaped ducts 10, 11, 12, 13 and 14 situated next to one another which connect to said bore hole and are co-axial with it. Thus, these ducts 10, 11, 12, 13 and 14 extend axially around the steering rod 9 and connect to the latter. The middlemost ring-shaped duct 10 is connected to the pressure line P. The two outer ring-shaped ducts 11 and 12 are connected to the reservoir T. Next to the middle ring-shaped duct 10, on one side, is situated the ring-shaped duct 13 between the ducts 10 and 11, having a first outlet A which is connected to the hydraulic system 6 of the work arm 1, and, on the other side, between the ducts 10 and 12, the ring-shaped duct 14 having a second outlet B which is also connected to the hydraulic system 6 of the work arm 1. The steering rod 9 is made cylindrically and has two co-axial ring-shaped constrictions 15 and 16 situated at a distance from one another which is at least equal to the width D of the middle ring-shaped duct 10 into which the pressure line P opens. This distance between the constrictions 15 and 16 is preferably larger than the width of each of said ring-shaped ducts 10, 11, 12, 13 and 14.

The above-mentioned hydraulic system 6 is known as such and practically consists of a cylinder in which a piston can move to and fro according to the axis of the cylinder, and whereby one of the far ends is connected to the outlet A, while the other far end is connected to the outlet B. The piston is provided with a piston rod extending through one of the bases of the cylinder and which is connected to the work arm 1 while the cylinder is connected to the frame of the device, or vice versa.

When the piston rod 9 is moved in the proportional steering slide 7, in a first position, the first outlet A is connected to the pressure line P via a first constriction 15 and the ring-shaped duct 10, and a second outlet B is connected to the reservoir T via a second constriction 16 and the ring-shaped duct 12, as represented in figure 5. As a result, the hydraulic system 6 which undergoes a pressure via the connection to the outlet A is driven in a specific direction in order to move the work arm with the tool. This may for example be a backward movement, represented by the arrow 30.

When the steering rod 9 is moved in the proportional steering slide 7, in a second position, the first outlet A is connected to the reservoir T via the first constriction 15 and the ring-shaped duct 11, and the second outlet B is connected to the pressure line P via said second constriction 16 and the ring-shaped duct 10, as represented in figure 6. As a result, the hydraulic system 6, which undergoes a pressure via the connection to the outlet B, will be driven in the opposite sense, such that said arm undergoes a corresponding movement. This may then for example be in the forward direction, represented by the arrow 31.

Further, the steering rod 9 has at least two recesses 17 and 18 according to a special embodiment of the invention, as represented in figures 4 to 6. These recesses 17 and 18 are formed in particular of a longitudinal groove provided in the surface of the steering rod 9. A first recess 17 connects to the first constriction 15 and extends in the longitudinal direction of the steering rod 9 on either side of this first constriction 15. A second recess 18 connects to the second constriction 16 and extends in the longitudinal direction of the steering rod 9 on either side of this second constriction 16.

The recesses 17 and 18 extend up to a short distance from one another, so that they are not directly connected to each other. This distance, According to the longitudinal direction of the steering rod 9, is shorter than the width D of the ring-shaped duct 10 into which the pressure line P opens.

The dimensions of these recesses 17 and 18 are such that in a third, neutral position of the steering rod 9, as shown in figure 4, the first outlet A is connected to both the pressure line P and the reservoir T via said first recess 17, while said second outlet B is connected to the pressure line P and the reservoir T via said second recess 18.

To this end, the recess 17 has two parts 17' and 17" situated on either side of the constriction 15. A first part 17' connects, in the third position of the steering rod 9, the ring-shaped duct 10 to the ring-shaped duct 13, while a second part 17" connects the ring-shaped duct 11 to the ring-shaped duct 13.

In an analogous manner, the recess 18 has two parts 18' and 18" situated on either side of the constriction 16. A first part 18' connects the ring-shaped duct 10 to the ring-shaped duct 14 in the third position of the steering rod 9, whereas a second part 18" connects the ring-shaped duct 12 to the ring-shaped duct 14.

In this third position, the hydraulic system 6 undergoes an equal pressure via the connection to the outlet A and the outlet B. The recesses 17 and 18 make sure that the pressure differences between the outlets A and B change gradually and at the same fast when the position of the steering rod 9 is changed. As the outlets A and B, in the third position of the steering rod 9, are both connected to the pressure line P and the reservoir T, the hydraulic system 6 will make the work arm 1 react faster when the steering rod 9 is placed in the first or second position. The work arm 1 will also be precisely positioned by the proportional steering slide 7, via the hydraulic system 6, as a result of the gradual pressure changes.

Preferably, the surface of any cross section whatsoever, perpendicular to the axis of the steering rod 9 of each of the recesses 17 and 18, and vice versa, is inversely proportionate to the distance E thereof in relation to the corresponding constriction 15 or 16. This implies that, the larger this distance E, the smaller this surface will be. Thus, during the transition from the third position of the steering rod 9 into the first or second position, the connection between the first or second constriction 15 and 16 and the pressure line P or the reservoir T will be gradually interrupted or will be made maximal. Consequently, the pressure changes in the outlets A and B will occur more gradually.

According to this special embodiment of the invention, via the recesses 17 and 18 in the steering rod 9, in the neutral or third position of this steering rod 9 in the steering slide 7, is guaranteed a continuous flow of hydraulic oil from the pressure line P to the reservoir T.

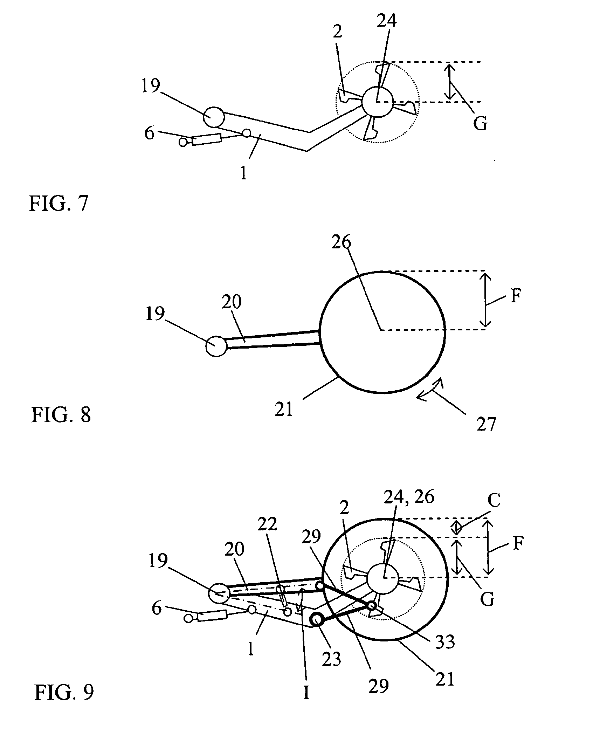

According to the special embodiment of the device according to the invention, the movable work arm 1 is hinge-mounted to the device in relation to a vertical axis of rotation 19, as represented in figure 1 and figure 7. When the device is moved, the work arm 1 can then veer away backward in the sense of the arrow 30 in relation to the progression of the device according to arrow 4 in order to avoid an obstacle 5 over said axis of rotation 19, as represented in figure 1.

An obstacle 5 is detected by means of detection unit 8 comprising a detection arm 20 which is also hinge-mounted in relation to the axis of rotation 19, as represented in figure 8.

On the far end of the detection arm 20 which is turned away from the axis of rotation 19 has been fixed a ring-shaped elastic detection bumper 21 which determines the detection distance C between the tool 2 and the obstacle 5. This bumper 21 forms a circle around the tool 2 whose radius F is larger than the radius G of the tool 2. The detection distance C is the difference between the radius F of the detection bumper 21 and the radius G of the tool 2 or the distance C between the perimeter of the bumper 21 and the perimeter of the tool 2. The bumper 31 is situated at a certain height from the surface of the ground 3 above the tool 2 which corresponds to the minimal height of the obstacles 5 to be detected.

The ring-shaped bumper 21 has an axis 26 which is practically perpendicular to the detection arm 20 and around which this bumper 21 can rotate freely as a wheel in two directions, as represented by the arrow 27. When the device moves over the ground 3, this ring-shaped bumper is positioned practically horizontally in relation to the ground 3. This arrangement prevents the obstacle, such as for example a tree trunk. From being damaged when it is hit by the bumper 21 of the detection arm 20.

The movable work arm 1 is connected to the detection arm 20 by means of a compression spring 22, such that the latter is brought to a front position according to the direction of movement 4 of the device, at a distance from the tool which amounts to the detection distance C.

When, while the device is being moved, an obstacle 5 hits the bumper 21, the latter will veer away together with the detection arm 20. The relative movement, of the detection arm 20 in relation to the movable work arm 1 is measured. To this end, the detection arm 20 is connected to the work arm 1 via hinge-mounted arm 29, provided with a potentiometer 23, as represented in figure 9. The potentiometer 23 generates an electric signal as a function of the angle l between the detection arm 20 and the work arm 1, and it transmits this electric signal to the steering slide 7. The steering slide 7 converts the electric signal in a hydraulic signal as a magnetic valve 28, controlled by the potentiometer 23, change the position of the steering rod 9 as a function of this electric signals As a result, the hydraulic system 6 of the movable work arm 1 is driven such that the relative movement of the detection arm 20 in relation to the work arm I is minimized or annulled. Consequently, the movable work arm 1 will follow the movement of the detection arm 20.

The sensitivity of the detection arm 20 can be set by adjusting the arm 29 which is connected to the potentiometer 23, for example by moving the hinge point 33 or by extending or shortening the arm 29.

The compression spring 22 co-determines the sensitivity of the detection arm 20, and it is erected such that it offers little resistance when being compressed.

The proportional hydraulic steering slide 9 and the hydraulic system 6 make sure that the work arm 1 veers away fast and accurately when the detection arm 20 hits an obstacle 5 and moves in the backward direction, represented by the arrow 30, towards the work arm 1. As a result, the work arm 1 follows the detection arm 20 almost perfectly without being subjected to disturbing vibrations or shocks.

Further, after the obstacle 5 has been passed, the detection arm 20 will move forward again, represented by the arrow 31, by means of the compression spring 22, as a result of which the work arm I following the detection arm 20 assumes its original position again.

The tool 2 is driven in relation to a vertical axis 24 by a hydraulic motor 25 situated above this tool 2.

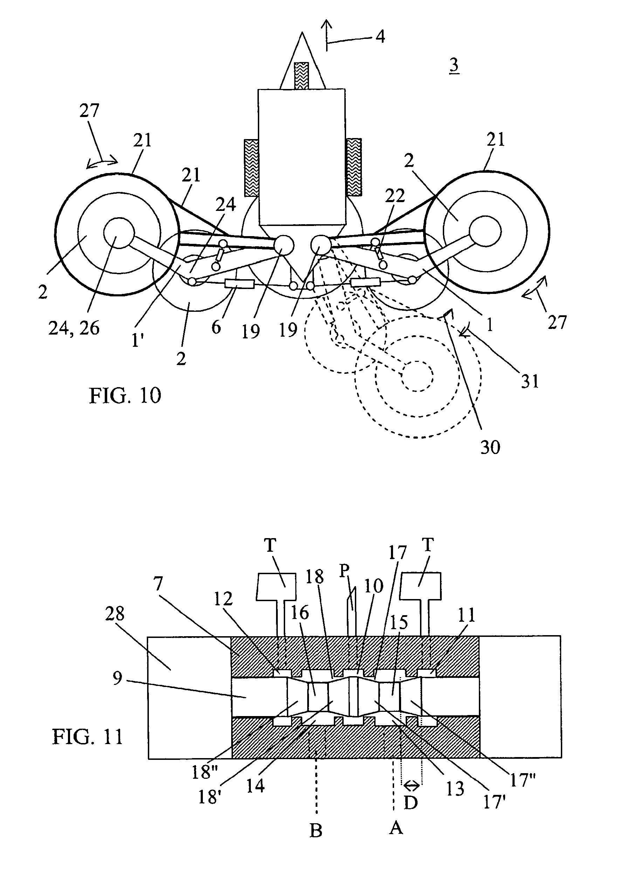

According to another embodiment of a device according to the invention, as represented in figure 10, the device is provided with two work arms 1 upon which have been mounted tools 2 rotating around their axes, such as for example lawn mowers, over the entire length. Both work arms I are movable in relation to the device and can be moved backward, as described above.

According to this other embodiment of a device according to the invention, practically the entire length of the detection arm 20 is preferably provided with a bumper 21.

According to yet another embodiment of a device according to the invention, as represented in figure 11, the recesses 17 and 18 in the steering rod 9 cover the entire perimeter of this steering rod 9, such that they form a widening of the accompanying constrictions 15 and 16. The surface of the cross section of these recesses 17 and 18 preferably decreases proportionately as it is situated further away from the accompanying constrictions 15 and 16.

Naturally, the invention is not restricted to the method described above and to the device represented in the accompanying drawings.

Thus, the detection arm can be replaced by a detection bumper mounted directly on the work arm, and whereby, when the detection bumper is pressed, the work arm is moved backward until the bumper is no longer pressed.

Thus, the detection arm can make use of an electric contact, made by pressing a switch when it hits an obstacle.

Thus, the hydraulic steering slide can be controlled directly by the detection arm without any additional means being provided to measure the relative movement of the detection arm in relation to the moveable work arm. To this end, the steering rod is controlled directly by the detection arm.

Further, said constrictions 15 and 16 must not necessarily be ring-shaped. Thus, the recesses 17 and 18 extend continuously in the surface of the steering rod 9, whereby the surface of a cross section, perpendicular to the axis of the steering rod 9, of these recesses 17 and 18 decreases as the distance to the middle part thereof increases. The middle part, which has the largest cross section, then forms said constriction 15 or 16.

Nor is it necessary for the surface of the cross section of the recesses 15 and 16, according to a plane perpendicular to the axis of the steering rod 9, to be inversely proportionate to the distance to said constriction 15 or 16. In particular, this surface can decrease in a continuous manner in any way whatsoever the more the distance to said constriction is larger.

## Claims

1. Device with a tool for performing certain operations, such as ploughing, working with the rotary cultivator or mowing, between obstacles (5) provided on a ground, whereby said tool (2) is mounted on a work arm (1) which can be moved in relation to the device, which is driven by a hydraulic system (6) connected to a hydraulic proportional steering slide (7), whereby the latter co-operates with a detection unit (8) in such a manner that, when the tool (2) is situated at a pre-determined detection distance (C) from one side of an obstacle (5), this detection unit (8) controls said steering slide (7) in order to maintain said detection distance (C) until said tool (2) is situated practically on the other side of the obstacle (5), whereby said steering slide (7) comprises a steering rod (9) and is connected to a hydraulic pressure line (P) of a hydraulic unit and to a reservoir (T) with a hydraulic liquid, and further has two outlets (A, B) which are connected to the hydraulic system (6), whereby the steering rod (9) has at least two constrictions (15,16), such that when it is moved in the proportional steering slide (7), in a first position, a first outlet (A) is connected to said pressure line (P) via a first constriction (15), and a second outlet (B) is connected to said reservoir (T) via a second constriction (16), such that the aforesaid hydraulic system (6) is driven in a specific direction in order to move said arm (1) with the tool (2), and, in a second position, the first outlet (A) is connected to the reservoir (T) via the first constriction (15), and the second outlet (B) is connected to the pressure line (P) via the second constriction (16), such that the hydraulic system (6) is driven in the opposite sense, as a result of which said arm (1) undergoes a corresponding movement, **characterised in that** said steering rod (9) has at least a first and a second recess (17, 18) which connect to said first and second constriction (15,16) respectively, such that in a third position of said steering rod (9), the aforesaid first outlet (A) is connected to the aforesaid pressure line (P) as well as to said reservoir (T) via said first recess (17), while said second outlet (B) is connected to the pressure line (P) and the reservoir (T) via said second recess (18).

2. Device according to claim 1, **characterised in that** each of said recesses (17,18) extends on either side of the respective constriction (15,16), whereby the cross section, according to a plane perpendicular to the axis of the steering rod (9), of each of said recesses (17,18) according to the longitudinal direction of the steering rod (9) decreases in a continuous manner as the distance (E) thereof to the accompanying constriction (15,16) increases.

3. Device according to claim 1 or 2, **characterised in that** each of said recesses (17,18) extends on either side of the respective constriction (15,16), whereby the cross section of each of said recesses (17,18) is inversely proportionate to the distance (E) thereof to the accompanying constriction (15,16).

4. Device according to any of claims 1 to 3, **characterised in that** said movable arm (1) is hinge-mounted in relation to a vertical axis of rotation (19) to said device.

5. Device according to claim 4, **characterised in that** said detection unit (8) comprises a detection arm (20) which is also hinge-mounted in relation to said axis of rotation (19), whereby means (23) are provided to measure the relative movement (H) of said detection arm (20) in relation to said movable arm (1) which work in conjunction with said steering slide (7) in order to drive this movable arm (1) to minimize said relative movement (H) or to annul it, such that the movable arm (1) follows the movement of the detection arm (20).

6. Device according to claim 5, **characterised in that** said means (23) for measuring the relative movement (H) of said detection arm (20) in relation to said movable arm (1) comprise a potentiometer.

7. Device according to claim 5 or 6, **characterised in that** the movable arm (1) is connected to the detection arm (20) in such a manner that the latter is brought to a front position according to the direction of movement (4) of the device.

8. Device according to any of claims 5 to 7, **characterised in that** said detection arm (20) extends over said pre-determined detection distance (C) in relation to said tool (2).

9. Device according to any of claims 5 to 8, **characterised in that** said detection arm (20) comprises a ring (21) whose radius (F) is said pre-determined distance (C) larger than the radius (G) of said tool (2).

10. Device according to any of claims 1 to 9, **characterised in that** said tool (2) is driven in relation to a vertical axis (24).

11. Device according to any of claims 1 to 10, **characterised in that** the perimeter of said ring (21) is elastic.

12. Device according to any of claims 1 to 10, **characterised in that** said ring (21) is erected such that it rotates freely around its axis (26).

13. Device according to any of claims 1 to 12, **characterised in that** height-regulating means (26) are provided to maintain the tool (2) at a constant height in relation to the ground (3).

14. Hydraulic proportional steering slide (7) for driving a hydraulic system (6), which comprises a steering rod (9) and is connected to a hydraulic pressure line (P) of a hydraulic unit and to a reservoir (T) with a hydraulic liquid, and further has two outlets (A, B) which are connected to the hydraulic system (6), whereby the steering rod (9) has at least two constrictions (15,16), such that when it is moved in the proportional steering slide (7), in a first position, a first outlet (A) is connected to said pressure line (P) via a first constriction (15), and a second outlet (B) is connected to said reservoir (T) via a second constriction (16), such that the aforesaid hydraulic system (6) is driven in a specific direction and, in a second position, the first outlet (A) is connected to the reservoir (T) via the first constriction (15), and the second outlet (B) is connected to the pressure line (P) via the second constriction (16), such that the hydraulic system (6) is driven in the opposite sense, **characterised in that** said steering rod (9) has a first and a second recess (17, 18) which connect to said first and second constriction (15, 16) respectively, such that in a third position of said steering rod (9), the aforesaid first outlet (A) is connected to the aforesaid pressure line (P) as well as to said reservoir (T) via said first recess (17), while said second outlet (B) is connected to the pressure line (P) and the reservoir (T) via said second recess (18).

15. Hydraulic proportional steering slide (7) according to claim 14, **characterised in that** each of said recesses (17,18) extends on either side of the respective constriction (15,16), whereby the cross section, according to a plane perpendicular to the axis of the steering rod (9), of each of said recesses (17,18) according to the longitudinal direction of the steering rod (9) decreases in a continuous manner as the distance (E) thereof to the accompanying constriction (15,16) increases.

16. Hydraulic proportional steering slide (7) according to claim 14 or 15, **characterised in that** each of said recesses (17,18) extends on either side of the respective constriction (15,16), whereby the cross section of each of said recesses (17,18) is inversely proportionate to the distance (E) thereof to the accompanying constriction (15,16).

17. Hydraulic proportional steering slide (7) according to any of claims 14 to 16, **characterised in that** said recesses (17,18) extend at a small distance from one another, whereby this distance, according to the longitudinal direction of the steering rod (9), is smaller than the width (D) of the duct (10) into which said pressure line (P) opens.

## Patentansprüche

1. Vorrichtung mit einem Werkzeug zur Durchführung bestimmter Arbeitsvorgänge, wie beispielsweise Pflügen, Arbeiten mit der Bodenfräse oder Mähen zwischen Hindernissen (5) auf einem Boden, wobei das Werkzeug (2) auf einem Arbeitsarm (1) montiert ist, der im Verhältnis zur Vorrichtung bewegt werden kann, die durch ein Hydrauliksystem (6) angetrieben wird, das mit einem hydraulischen Proportional-Steuerschieber (7) verbunden ist, wobei der Letztere mit einer Detektionseinheit (8) so zusammen arbeitet, dass in dem Fall, dass sich das Werkzeug (2) in einem bestimmten Detektions-Abstand (C) von einer Seite eines Hindernisses (5) befindet, diese Detektionseinheit (8) den Steuerschieber (7) kontrolliert, um den Detektions-Abstand (C) aufrecht zu erhalten, bis das Werkzeug (2) sich praktisch auf der anderen Seite des Hindernisses (5) befindet, wobei der Steuerschieber (7) eine Lenkstange (9) umfasst und mit einer Hydraulikdruckleitung (P) einer Hydraulikeinheit und einem Tank (T) verbunden ist, der mit einer Hydraulikflüssigkeit gefüllt ist, und zwei Auslässe (A, B) aufweist, die mit dem Hydrauliksystem (6) verbunden sind, wobei die Lenkstange (9) mindestens zwei Verengungen (15, 16) aufweist, so dass, wenn sie im Proportional-Steuerschieber (7) bewegt wird, in einer ersten Position ein erster Auslass (A) über eine erste Verengung (15) mit der Druckleitung (P) verbunden ist, und ein zweiter Auslass (B) über eine zweite Verengung (16) mit dem Tank (T) verbunden ist, so dass das Hydrauliksystem (6) in eine bestimmte Richtung angetrieben wird, um den Arm (1) mit dem Werkzeug (2) zu bewegen, und in einer zweiten Position der erste Auslass (A) über die erste Verengung (15) mit dem Tank (T) verbunden ist und der zweite Auslass (B) über die zweite Verengung (16) mit der Druckleitung (P) verbunden ist, so dass das Hydrauliksystem (6) in die entgegengesetzte Richtung angetrieben wird, woraufhin der Arm (1) einer entsprechenden Bewegung unterzogen wird, **dadurch gekennzeichnet, dass** die Lenkstange (9) mindestens eine erste und eine zweite Vertiefung (17, 18) aufweist, welche eine Verbindung mit der ersten bzw. der zweiten Verengung (15, 16) eingehen, so dass in einer dritten Position der Lenkstange (9) der erste Auslass (A) über die erste Vertiefung (17) mit der Druckleitung (P) und mit dem Tank (T) verbunden ist, während der zweite Auslass (B) über die zweite Vertiefung (18) mit der Druckleitung (P) und dem Tank (T) verbunden ist.

2. Vorrichtung gemäß Anspruch 1, **dadurch gekennzeichnet, dass** sich jede der Vertiefungen (17, 18) zu beiden Seiten der entsprechenden Verengung (15, 16) erstreckt, wobei der Querschnitt der Vertiefungen (17, 18) gemäß einer senkrecht zur Achse der Lenkstange (9) stehenden Ebene in Längsrichtung der Lenkstange (9) kontinuierlich abnimmt, während der Abstand (E) derselben zur zugehörigen Verengung (15, 16) zunimmt.

3. Vorrichtung gemäß Anspruch 1 oder 2, **dadurch gekennzeichnet, dass** sich jede der Vertiefungen (17, 18) zu beiden Seiten der jeweiligen Verengung (15, 16) erstreckt, wobei der Querschnitt jeder der Vertiefungen (17, 18) umgekehrt proportional zum Abstand (E) derselben von der zugehörigen Verengung (15, 16) ist.

4. Vorrichtung gemäß einem der Ansprüche 1 bis 3, **dadurch gekennzeichnet, dass** der bewegliche Arm (1) im Verhältnis zu einer vertikalen Rotationsachse (19) an der Vorrichtung schwenkbar montiert ist.

5. Vorrichtung gemäß Anspruch 4, **dadurch gekennzeichnet, dass** die Detektionseinheit (8) einen Detektionsarm (20) umfasst, der ebenfalls im Verhältnis zur Rotationsachse (19) schwenkbar montiert ist, wobei ein Mittel (23) vorgesehen ist, um die relative Bewegung (H) des Detektionsarms (20) im Verhältnis zum beweglichen Arm (1) zu messen, das in Verbindung mit dem Steuerschieber (7) wirksam wird, um diesen beweglichen Arm (1) anzutreiben, um die relative Bewegung (H) zu minimieren oder zu annullieren, so dass der bewegliche Arm (1) der Bewegung des Detektionsarms (20) folgt.

6. Vorrichtung gemäß Anspruch 5, **dadurch gekennzeichnet, dass** das Mittel (23) zum Messen der relativen Bewegung (H) des Detektionsarms (20) im Verhältnis zum beweglichen Arm (1) ein Potentiometer umfasst.

7. Vorrichtung gemäß Anspruch 5 oder 6, **dadurch gekennzeichnet, dass** der bewegliche Arm (1) mit dem Detektionsarm (20) so verbunden ist, dass der Letztere in eine Frontalposition zur Bewegungsrichtung (4) der Vorrichtung gebracht wird.

8. Vorrichtung gemäß einem der Ansprüche 5 bis 7, **dadurch gekennzeichnet, dass** sich der Detektionsarm (20) über den bestimmten Detektions-Abstand (C) im Verhältnis zum Werkzeug (2) erstreckt.

9. Vorrichtung gemäß einem der Ansprüche 5 bis 8, **dadurch gekennzeichnet, dass** der Detektionsarm (20) einen Ring (21) umfasst, dessen Radius (F) um den bestimmten Abstand (C) größer ist als der Radius (G) des Werkzeugs (2).

10. Vorrichtung gemäß einem der Ansprüche 1 bis 9, **dadurch gekennzeichnet, dass** das Werkzeug (2) im Verhältnis zu einer vertikalen Achse (24) angetrieben wird.

11. Vorrichtung gemäß einem der Ansprüche 1 bis 10, **dadurch gekennzeichnet, dass** der Außenumfang des Rings (21) elastisch ist.

12. Vorrichtung gemäß einem der Ansprüche 1 bis 10, **dadurch gekennzeichnet, dass** der Ring (21) so aufgestellt ist, dass er frei um seine Achse (26) rotiert.

13. Vorrichtung gemäß einem der Ansprüche 1 bis 12, **dadurch gekennzeichnet, dass** ein Mittel (26) zur Höhenregulierung dazu vorgesehen ist, das Werkzeug (2) in einer konstanten Höhe im Verhältnis zum Boden (3) zu halten.

14. Hydraulischer Proportional-Steuerschieber (7) zum Antrieb eines Hydrauliksystems (6), das eine Lenkstange (9) umfasst und mit einer hydraulischen Druckleitung (P) einer Hydraulikeinheit und einem Tank (T) mit einer Hydraulikflüssigkeit verbunden ist und des weiteren zwei Auslässe (A, B) aufweist, die mit dem Hydrauliksystem (6) verbunden sind, wobei die Lenkstange (9) mindestens zwei Verengungen (15, 16) aufweist, so dass wenn sie im Proportional-Steuerschieber (7) bewegt wird, in einer ersten Position über eine erste Verengung (15) ein erster Auslass (A) an der Druckleitung (P) angeschlossen ist und über eine zweite Verengung (16) ein zweiter Auslass (B) an den Tank (T) angeschlossen ist, so dass das Hydrauliksystem (6) in eine bestimmte Richtung angetrieben wird, und in einer zweiten Position der erste Auslass (A) über die erste Verengung (15) an den Tank (T) angeschlossen ist und der zweite Auslass (B) über die zweite Verengung (16) an die Druckleitung (P) angeschlossen ist, so dass das Hydrauliksystem (6) in der Gegenrichtung angetrieben wird, **dadurch gekennzeichnet, dass** die Lenkstange (9) eine erste und eine zweite Vertiefung (17, 18) aufweist, welche mit der ersten bzw. der zweiten Verengung (15, 16) Verbindung aufnimmt, so dass in einer dritten Position der Lenkstange (9) der erste Auslass (A) über die erste Vertiefung (17) an die Druckleitung (P) und an den Tank (T) angeschlossen ist, während der zweite Auslass (B) über die zweite Vertiefung (18) an die Druckleitung (P) und an den Tank (T) angeschlossen ist.

15. Hydraulischer Proportional-Steuerschieber (7) gemäß Anspruch 14, **dadurch gekennzeichnet, dass** sich jede der Vertiefungen (17, 18) auf beiden Seiten der entsprechenden Verengung (15, 16) erstreckt, wobei der Querschnitt in einer Ebene im rechten Winkel zu der Achse der Lenkstange (9) jeder der Vertiefungen (17, 18) in der Längsrichtung der Lenkstange (9) kontinuierlich abnimmt, während der Abstand (E) derselben zu der zugehörigen Verengung (15, 16) zunimmt.

16. Hydraulischer Proportional-Lenkschieber (7) gemäß Anspruch 14 oder 15, **dadurch gekennzeichnet, dass** sich jede der Vertiefungen (17, 18) zu beiden Seiten der entsprechenden Verengung (15, 16) erstreckt, wobei der Querschnitt jeder der Vertiefungen (17, 18) umgekehrt proportional zum Abstand (E) derselben zu der zugehörigen Verengung (15, 16) ist.

17. Hydraulischer Proportional-Lenkschieber (7) gemäß einem der Ansprüche 14 bis 16, **dadurch gekennzeichnet, dass** sich die Vertiefungen (17, 18) in einem kleinen Abstand voneinander erstrecken, wobei dieser Abstand in der Längsrichtung der Lenkstange (9) kleiner ist als die Breite (D) des Kanals (10), in den sich die Druckleitung (P) öffnet.

## Revendications

1. Dispositif comprenant un outil pour exécuter certaines opérations, telles que le labourage, le travail avec un rotoculteur ou le fauchage, entre des obstacles (5) disposés sur le sol, dans lequel ledit outil (2) est monté sur un bras de travail (1) qui peut être déplacé par rapport au dispositif, qui est entraîné par un système hydraulique (6) qui est connecté à une glissière de direction proportionnelle hydraulique (7), dans lequel cette dernière coopère avec une unité de détection (8) de telle sorte que, lorsque l'outil (2) est situé à une distance de détection prédéterminée (C) par rapport à un côté d'un obstacle (5), cette unité de détection (8) commande ladite glissière de direction (7) dans le but de maintenir ladite distance de détection (C) jusqu'à ce que ledit outil (2) soit situé pratiquement de l'autre côté de l'obstacle (5), dans lequel ladite glissière de direction (7) comprend une bielle de direction (9) et est connectée à une ligne de pression hydraulique (P) d'une unité hydraulique et à un réservoir (T) qui contient un liquide hydraulique, et présente en outre deux orifices de sortie (A, B) qui sont reliés au système hydraulique (6), dans lequel la bielle de direction (9) présente au moins deux étranglements (15, 16) de telle sorte que, lorsqu'elle est déplacée dans la glissière de direction proportionnelle (7), dans une première position, un premier orifice de sortie (A) soit relié à ladite ligne de pression (P) par l'intermédiaire d'un premier étranglement (15), et qu'un deuxième orifice de sortie (B) soit connecté audit réservoir (T) par l'intermédiaire d'un deuxième étranglement (16), de telle sorte que le système hydraulique (6) mentionné ci-dessus soit entraîné dans une direction spécifique dans le but de déplacer ledit bras (1) avec l'outil (2) et que, dans une deuxième position, le premier orifice de sortie (A) soit connecté au réservoir (T) par l'intermédiaire du premier étranglement (15), et que le deuxième orifice de sortie (B) soit relié à la ligne de pression (P) par l'intermédiaire du deuxième étranglement (16), de telle sorte que le système hydraulique (6) soit entraîné dans le sens opposé, avec comme conséquence que ledit bras (1) subit un mouvement correspondant, **caractérisé en ce que** ladite bielle de direction (9) comporte au moins un premier et un deuxième évidements (17, 18) qui sont reliés auxdits premier et deuxième étranglements (15, 16) respectivement, de telle sorte que, dans une troisième position de ladite bielle de direction (9), le premier orifice de sortie (A) mentionné ci-dessus soit relié à la ligne de pression (P) mentionnée ci-dessus ainsi qu'audit réservoir (T) par l'intermédiaire dudit premier évidement (17), alors que ledit deuxième orifice de sortie (B) est relié à la ligne de pression (P) ainsi qu'au réservoir (T) par l'intermédiaire dudit deuxième évidement (18).

2. Dispositif selon la revendication 1, **caractérisé en ce que** chacun desdits évidements (17, 18) s'étend de part et d'autre de l'étranglement respectif (15, 16), dans lequel la section transversale, selon un plan perpendiculaire à l'axe de la bielle de direction (9), de chacun desdits évidements (17, 18) selon la direction longitudinale de la bielle de direction (9) diminue d'une façon continue au fur et à mesure que le distance (E) entre celle-ci et son étranglement associé (15, 16) augmente.

3. Dispositif selon la revendication 1 ou 2, **caractérisé en ce que** chacun desdits évidements (17, 18) s'étend de part et d'autre de l'étranglement respectif (15, 16), dans lequel la section transversale de chacun desdits évidements (17, 18) est inversement proportionnelle à la distance (E) entre ceux-ci et leur étranglement associé (15, 16).

4. Dispositif selon l'une quelconque des revendications 1 à 3, **caractérisé en ce que** ledit bras mobile (1) est monté sur ledit dispositif de façon articulée par rapport à un axe vertical de rotation (19).

5. Dispositif selon la revendication 4, **caractérisé en ce que** ladite unité de détection (8) comprend un bras de détection (20) qui est également monté de façon articulée par rapport audit axe de rotation (19), dans lequel des moyens (23) sont prévus pour mesurer le déplacement relatif (H) dudit bras de détection (20) par rapport audit bras mobile (1) et opèrent en conjonction avec ladite glissière de direction (7) dans le but d'entraîner ce bras mobile (1) pour minimiser ledit déplacement relatif (H) voire à annuler celui-ci, de telle sorte que le bras mobile (1) suive le déplacement du bras de détection (20).

6. Dispositif selon la revendication 5, **caractérisé en ce que** lesdits moyens (23) pour mesurer le déplacement relatif (H) dudit bras de détection (20) par rapport audit bras mobile (1) comprennent un potentiomètre.

7. Dispositif selon la revendication 5 ou 6, **caractérisé en ce que** le bras mobile (1) est connecté au bras de détection (20) de telle sorte que ce dernier soit amené dans une position avant selon la direction de déplacement (4) du dispositif.

8. Dispositif selon l'une quelconque des revendications 5 à 7, **caractérisé en ce que** ledit bras de détection (20) s'étend sur une distance de détection prédéterminée (C) par rapport audit outil (2).

9. Dispositif selon l'une quelconque des revendications 5 à 8, **caractérisé en ce que** ledit bras de détection (20) comprend un anneau (21) dont le rayon (F) est égal à ladite distance prédéterminée (C) et est supérieur au rayon (G) dudit outil (2).

10. Dispositif selon l'une quelconque des revendications 1 à 9, **caractérisé en ce que** ledit outil (2) est entraîné par rapport à un axe vertical (24).

11. Dispositif selon l'une quelconque des revendications 1 à 10, **caractérisé en ce que** le périmètre dudit anneau (21) est élastique.

12. Dispositif selon l'une quelconque des revendications 1 à 10, **caractérisé en ce que** ledit anneau (21) est disposé de telle sorte qu'il tourne librement autour de son axe (26).

13. Dispositif selon l'une quelconque des revendications 1 à 12, **caractérisé en ce que** des moyens de réglage de hauteur (26) sont prévus pour maintenir l'outil (2) à une hauteur constante par rapport au sol (3).

14. Glissière de direction proportionnelle hydraulique (7) pour entraîner un système hydraulique (6), qui comprend une bielle de direction (9) et qui est reliée à une ligne de pression hydraulique (P) d'une unité hydraulique et à un réservoir (T) qui contient un liquide hydraulique, et qui présente en outre deux orifices de sortie (A, B) qui sont reliés au système hydraulique (6), dans laquelle la bielle de direction (9) présente au moins deux étranglements (15, 16) de telle sorte que, lorsqu'elle est déplacée dans la glissière de direction proportionnelle (7), dans une première position, un premier orifice de sortie (A) soit relié à ladite ligne de pression (P) par l'intermédiaire d'un premier étranglement (15), et qu'un deuxième orifice de sortie (B) soit connecté audit réservoir (T) par l'intermédiaire d'un deuxième étranglement (16), de telle sorte que le système hydraulique (6) mentionné ci-dessus soit entraîné dans une direction spécifique et que, dans une deuxième position, le premier orifice de sortie (A) soit connecté au réservoir (T) par l'intermédiaire du premier étranglement (15), et que le deuxième orifice de sortie (B) soit relié à la ligne de pression (P) par l'intermédiaire du deuxième étranglement (16), de telle sorte que le système hydraulique (6) soit entraîné dans le sens opposé, **caractérisée en ce que** ladite bielle de direction (9) comporte un premier et un deuxième évidements (17, 18) qui sont reliés auxdits premier et deuxième étranglements (15, 16) respectivement, de telle sorte que, dans une troisième position de ladite bielle de direction (9), le premier orifice de sortie (A) mentionné ci-dessus soit relié à la ligne de pression (P) mentionnée ci-dessus ainsi qu'audit réservoir (T) par l'intermédiaire dudit premier évidement (17), alors que ledit deuxième orifice de sortie (B) est relié à la ligne de pression (P) ainsi qu'au réservoir (T) par l'intermédiaire dudit deuxième évidement (18).

15. Glissière de direction proportionnelle hydraulique (7) selon la revendication 14, **caractérisée en ce que** chacun desdits évidements (17, 18) s'étend de part et d'autre de l'étranglement respectif (15, 16), dans laquelle la section transversale, selon un plan perpendiculaire à l'axe de la bielle de direction (9), de chacun desdits évidements (17, 18) selon la direction longitudinale de la bielle de direction (9) diminue d'une façon continue au fur et à mesure que la distance (E) entre celle-ci et son étranglement associé (15, 16) augmente.

16. Glissière de direction proportionnelle hydraulique (7) selon la revendication 14 ou 15, **caractérisée en ce que** chacun desdits évidements (17, 18) s'étend de part et d'autre de l'étranglement respectif (15, 16), dans laquelle la section transversale de chacun desdits évidements (17, 18) est inversement proportionnelle à la distance (E) entre ceux-ci et leur étranglement associé (15, 16).

17. Glissière de direction proportionnelle hydraulique (7) selon l'une quelconque des revendications 14 à 16, **caractérisée en ce que** lesdits évidements (17, 18) s'étendent à une courte distance l'un vis-à-vis de l'autre, dans laquelle cette distance, selon la direction longitudinale de la bielle de direction (9), est inférieure à la largeur (D) du conduit (10) dans lequel ladite ligne de pression (P) s'ouvre.
